(19) Europäisches Patentamt
European Patent Office
Office européen des brevets

(11) **EP 0 768 986 B1**

(12) **FASCICULE DE BREVET EUROPEEN**

(45) Date de publication et mention
de la délivrance du brevet:
**17.09.2003 Bulletin 2003/38**

(21) Numéro de dépôt: **95925013.5**

(22) Date de dépôt: **05.07.1995**

(51) Int Cl.$^7$: **C01B 33/141**, C01B 33/193,
C09D 5/08, C04B 22/06,
D21H 17/68
// C04B103:12

(86) Numéro de dépôt international:
**PCT/FR95/00901**

(87) Numéro de publication internationale:
**WO 96/001787 (25.01.1996 Gazette 1996/05)**

(54) **SUSPENSION CONCENTREE DE SILICE DE PRECIPITATION, PROCEDES POUR SA PREPARATION ET UTILISATIONS DE CETTE SUSPENSION**

KONZENTRIERTE FÄLLUNGSKIESELSÄURESUSPENSION, VERFAHREN ZU IHRER HERSTELLUNG UND VERWENDUNG DIESER SUSPENSION

CONCENTRATED SUSPENSION OF PRECIPITATION SILICA, METHODS OF PREPARATION AND UTILISATIONS OF SAID SUSPENSION

(84) Etats contractants désignés:
**AT BE CH DE DK ES FR GB GR IE IT LI LU MC NL PT SE**

(30) Priorité: **07.07.1994 FR 9408430**

(43) Date de publication de la demande:
**23.04.1997 Bulletin 1997/17**

(73) Titulaire: **RHODIA CHIMIE**
**92408 Courbevoie Cédex (FR)**

(72) Inventeurs:
• **PRAT, Evelyne**
**F-93500 Pantin (FR)**
• **FROUIN, Laurent**
**F-94240 L'Hay-les-Roses (FR)**

(74) Mandataire: **Bernasconi, Jean Raymond et al**
**c/o Cabinet Lavoix,**
**2, Place d'Estienne d'Orves**
**75441 Paris Cedex 09 (FR)**

(56) Documents cités:
**EP-A- 0 329 509        EP-A- 0 368 722**
**EP-A- 0 520 862        WO-A-90/03330**

Remarques:
Le dossier contient des informations techniques présentées postérieurement au dépôt de la demande et ne figurant pas dans le présent fascicule.

**Description**

La présente invention concerne une suspension aqueuse de silice de précipitation.

Les suspensions aqueuses de silice sont utilisées dans des domaines très variés, et notamment l'industrie papetière ou du béton.

Pour ces diverses applications, il est intéressant de disposer de suspensions présentant une teneur en matière sèche élevée. Or, de telles suspensions présentent des viscosités très élevées, ce qui entraîne des difficultés de pompage et réduit donc les possibilités d'utilisation industrielle.

De plus, ces suspensions ont tendance à sédimenter ou à gélifier et présentent de ce fait une instabilité qui les rend difficilement transportables ou stockables. On observe en effet très souvent à l'issue du transport ou après une plus ou moins longue période de stockage la formation d'un gel ou le dépôt d'une couche dure surmontée d'une bouillie fluide mais pauvre en matière sèche. Il est alors souvent impossible de remettre la silice en suspension ou d'obtenir une bouillie présentant une viscosité suffisamment faible pour être pompable et donc utilisable industriellement.

Le but de la présente invention est donc de fournir des suspensions aqueuses de silice à forte teneur en matière sèche présentant une faible viscosité et une bonne stabilité dans le temps.

Ainsi, plus précisément, l'invention a pour objet une suspension aqueuse de silice de précipitation ne comprenant pas d'agent dispersant, caractérisée en ce que sa teneur en matière sèche est comprise entre 10 et 40 %, sa viscosité est inférieure à $4.10^{-2}$ Pa.s pour un cisaillement de 50 s$^{-1}$ et la quantité de silice contenue dans le surnageant obtenu après centrifugation de ladite suspension à 7500 tours par minute pendant 30 minutes, représente plus de 50% du poids de la silice contenue dans la suspension.

De préférence, la teneur en matière sèche de ladite suspension est comprise entre 15 et 35 % en poids. La viscosité de ladite suspension est avantageusement inférieure à $2.10^{-2}$ Pa.s pour un cisaillement de 50 s$^{-1}$.

La suspension selon l'invention est très stable et sa stabilité peut être appréciée grâce à un test de sédimentation qui consiste à centrifuger ladite suspension à 7500 tr/min pendant 30 minutes. La quantité de silice contenue dans le surnageant obtenu à l'issue de cette centrifugation, mesurée après séchage du surnageant à 160 °C jusqu'à obtention d'un poids constant de matière, représente plus de 50 %, de préférence plus de 60 % du poids de la silice contenue dans la suspension.

Avantageusement, la quantité de silice contenue dans le surnageant obtenu après centrifugation représente plus de 70 %, en particulier plus de 90 % du poids de la silice contenue dans la suspension.

Une autre caractéristique de la suspension selon l'invention concerne la granulométrie des particules de silice en suspension.

En effet, les suspensions de silice concentrées connues jusqu'à présent, outre leur viscosité élevée, présentent l'inconvénient de comporter en suspension des agglomérats de grande taille rendant en particulier difficile l'injection en milieu poreux.

La répartition granulométrique des matières en suspension peut être définie au moyen du diamètre médian $D_{50}$, qui est le diamètre de grain tel que 50% de la population de grains en suspension présentent un diamètre inférieur.

De même, $D_{95}$ représente le diamètre de grain tel que 95% de la population de grains en suspension présentent un diamètre inférieur.

Une autre grandeur caractéristique des suspensions est le facteur de désagglomération $F_D$. Ce facteur, d'autant plus élevé que la suspension de silice est désagglomérée, est indicatif du taux de fines, c'est-à-dire du taux de particules de taille inférieure à 0,1 μm qui ne sont pas détectées par un granulomètre.

$F_D$ est mesuré en introduisant dans un granulomètre un volume connu V de suspension diluée de manière à obtenir une teneur en silice de 4 % en poids et est égal au rapport (10 x V en ml)/(concentration optique détectée par le granulomètre).

Les agglomérats de silice présents dans la suspension selon l'invention sont de faible taille.

De préférence, la répartition granulométrique des agglomérats en suspension est telle que leur diamètre médian $D_{50}$ est inférieur à 5 μm et le facteur de désagglomération $F_D$ est supérieur à 3 ml.

Avantageusement, le diamètre $D_{50}$ est inférieur à 2 μm, le facteur $F_D$ est supérieur à 13 ml et en outre, le diamètre $D_{95}$ est inférieur à 20 μm.

De préférence, la suspension selon l'invention comprend un gâteau de filtration provenant d'une réaction de précipitation (désigné par la suite par "gâteau de précipitation") qui est lavé si nécessaire et ensuite délité.

Selon un mode de réalisation de l'invention, le délitage se fait entre autres par voie chimique, de sorte que la suspension comprend de l'aluminium en quantité telle que le rapport pondéral Al/$SiO_2$ soit compris entre 1000 et 3300 ppm.

Ladite suspension peut être préparée suivant différents procédés décrits ci-dessous et qui sont également des objets de la présente invention.

La synthèse de la silice se fait par une réaction de précipitation (A) mettant en oeuvre un silicate de métal alcalin $SiO_2$/n$M_2O$, n étant le rapport molaire du silicate, et un agent acidifiant. Ensuite, dans une étape (B), le gâteau de précipitation est séparé du mélange réactionnel, puis dans une étape (C) est transformé en une suspension possédant les propriétés désirées.

Pour la réaction de précipitation, on peut utiliser en tant que silicate toute forme courante de silicates tels que métasilicates, disilicates et avantageusement un silicate de métal alcalin M dans lequel M est le sodium ou le potassium.

Dans le cas où l'on utilise le silicate de sodium, celui-ci présente avantageusement un rapport molaire $SiO_2/Na_2O$ compris entre 2 et 4, plus particulièrement entre 3,0 et 3,7.

Le choix de l'agent acidifiant et du silicate se fait d'une manière bien connue en soi. On peut rappeler qu'on utilise généralement comme agent acidifiant un acide minéral fort tel que l'acide sulfurique, l'acide phosphorique, l'acide nitrique ou l'acide chlorhydrique, ou un acide organique tel que l'acide acétique, l'acide formique ou l'acide carbonique.

De manière générale, on préfère employer, comme agent acidifiant, l'acide sulfurique et, comme silicate, le silicate de sodium.

Dans un premier mode de réalisation de l'invention, on réalise la précipitation (A) de la manière suivante :

(i) on forme un pied de cuve initial comportant une partie de la quantité totale du silicate de métal alcalin M engagé dans la réaction, la concentration en silicate exprimée en $SiO_2$ dans ledit pied de cuve étant inférieure à 20 g/l,

(ii) on ajoute l'agent acidifiant audit pied de cuve initial jusqu'à ce qu'au moins 5 % de la quantité de $M_2O$ présente dans ledit pied de cuve initial soient neutralisés,

(iii) on ajoute au milieu réactionnel simultanément de l'agent acidifiant et la quantité restante de silicate de métal alcalin M telle que la rapport (quantité de silice ajoutée)/(quantité de silice présente dans le pied de cuve initial) soit compris entre 10 et 100. Ce dernier rapport est appelé taux de consolidation.

Il a été ainsi trouvé qu'une concentration très faible en silicate exprimée en $SiO_2$ dans le pied de cuve initial ainsi qu'un taux de consolidation approprié lors de l'étape d'addition simultané constituaient des conditions importantes pour conférer aux produits obtenus leurs excellentes propriétés.

De préférence, dans ce mode de réalisation, on opère comme suit :

On forme tout d'abord un pied de cuve qui comprend du silicate. La quantité de silicate présente dans ce pied de cuve initial ne représente avantageusement qu'une partie de la quantité totale de silicate engagée dans la réaction.

Selon une caractéristique essentielle du procédé de préparation selon l'invention, la concentration en silicate dans le pied de cuve initial est inférieure à 20 g de $SiO_2$ par litre. De préférence, cette concentration est d'au plus 11 g/l et, éventuellement, d'au plus 8 g/l.

Les conditions imposées à la concentration en silicate dans le pied de cuve initial conditionnent en partie les caractéristiques des silices obtenues.

Le pied de cuve initial peut comprendre un électrolyte. Néanmoins, de préférence, aucun électrolyte n'est utilisé au cours du procédé de préparation selon l'invention ; en particulier, de manière préférée, le pied de cuve initial ne comprend pas d'électrolyte.

Le terme électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le sulfate de sodium dans le cas de la réaction d'un silicate de sodium avec l'acide sulfurique.

La deuxième étape consiste à ajouter l'agent acidifiant dans le pied de cuve de composition décrite plus haut.

Ainsi, dans cette deuxième étape, on ajoute l'agent acidifiant audit pied de cuve initial jusqu'à ce qu'au moins 5 %, de préférence au moins 50 %, de la quantité de $M_2O$ présente dans ledit pied de cuve initial soient neutralisés.

De manière préférée, dans cette deuxième étape, on ajoute l'agent acidifiant audit pied de cuve initial jusqu'à ce que 50 à 99 % de la quantité de $M_2O$ présente dans ledit pied de cuve initial soient neutralisés.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration est de préférence comprise entre 40 et 180 g/l, par exemple entre 60 et 130 g/l.

Une fois qu'est atteinte la valeur souhaitée de la quantité de $M_2O$ neutralisé, on procède alors à une addition simultanée (étape (iii)) d'agent acidifiant et d'une quantité de silicate de métal alcalin M telle que le taux de consolidation, c'est-à-dire le rapport (quantité de silice ajoutée)/(quantité de silice présente dans le pied de cuve initial) soit compris entre 10 et 100, de préférence entre 12 et 50, en particulier entre 13 et 40.

De manière préférée, pendant toute l'étape (iii), la quantité d'agent acidifiant ajoutée est telle que 80 à 99 %, par exemple 85 à 97 %, de la quantité de $M_2O$ ajoutée soient neutralisés.

L'agent acidifiant utilisé lors de l'étape (iii) peut être dilué ou concentré ; sa normalité peut être comprise entre 0,4 et 36 N, par exemple entre 0,6 et 1,5 N.

En particulier, dans le cas où cet agent acidifiant est l'acide sulfurique, sa concentration est de préférence comprise entre 40 et 180 g/l, par exemple entre 60 et 130 g/l.

En général, le silicate de métal alcalin M ajouté lors de l'étape (iii) présente une concentration exprimée en silice comprise entre 40 et 330 g/l, par exemple entre 60 et 250 g/l.

La réaction de précipitation proprement dite est terminée lorsque l'on a ajouté toute la quantité restante de silicate.

Il est avantageux d'effectuer, notamment après l'addition simultanée précitée, un mûrissement du milieu réactionnel, ce mûrissement pouvant par exemple durer de 1 à 60 minutes, en particulier de 5 à 30 minutes.

Il est enfin souhaitable, après la précipitation, dans une étape ultérieure, notamment avant le mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3 et 6,5, de préférence entre 4 et 5,5. Elle permet notamment de neutraliser toute la quantité de $M_2O$ ajoutée lors de l'étape (iii).

L'agent acidifiant utilisé lors de cette addition est généralement identique à celui employé lors de l'étape (iii) du procédé de préparation selon l'invention.

La température du milieu réactionnel est habituellement comprise entre 60 et 98°C.

De préférence, l'addition d'agent acidifiant lors de l'étape (ii) s'effectue dans un pied de cuve initial dont la température est comprise entre 60 et 96°C.

Selon une variante de l'invention, la réaction est effectuée à une température constante comprise entre 75 et 96°C. Selon une autre variante de l'invention, la température de fin de réaction est plus élevée que la température de début de réaction : ainsi, on maintient la température au début de la réaction de préférence entre 70 et 96°C, puis on augmente la température en cours de réaction en quelques minutes, de préférence jusqu'à une valeur comprise entre 80 et 98°C, valeur à laquelle elle est maintenue jusqu'à la fin de la réaction.

On obtient, à l'issue des opérations qui viennent d'être décrites, une bouillie de silice qui est ensuite séparée (séparation liquide-solide).

En variante, selon un autre mode de réalisation de l'invention, on réalise la précipitation (A) de la manière suivante :

(i) on forme un pied de cuve initial comportant au moins une partie de la quantité totale du silicate de métal alcalin M engagé dans la réaction et un électrolyte, la concentration en silicate exprimée en $SiO_2$ dans ledit pied de cuve initial étant inférieure à 100 g/l et la concentration en électrolyte dans ledit pied de cuve initial étant inférieure à 17 g/l ;

(ii) on ajoute l'agent acidifiant audit pied de cuve jusqu'à l'obtention d'une valeur du pH du milieu réactionnel d'au moins environ 7 ;

(iii) on ajoute au milieu réactionnel de l'agent acidifiant et, le cas échéant, simultanément la quantité restante du silicate.

Il a été ainsi trouvé qu'une concentration faible en silicate et en électrolyte dans le pied de cuve initial constituaient des conditions importantes pour conférer aux produits obtenus leurs excellentes propriétés.

De préférence, dans ce mode de réalisation, on opère comme suit :

On forme tout d'abord un pied de cuve qui comprend du silicate ainsi qu'un électrolyte. La quantité de silicate présente dans le pied de cuve peut soit être égale à la quantité totale engagée dans la réaction, soit ne représenter qu'une partie de cette quantité totale.

Comme électrolyte, on utilise en particulier un sel du groupe des sels des métaux alcalins et alcalinoterreux et de préférence le sel du métal de silicate de départ et de l'agent acidifiant, par exemple le sulfate de sodium dans le cas de la réaction d'un silicate de sodium avec l'acide sulfurique.

Selon une caractéristique essentielle du procédé de préparation selon l'invention, la concentration en électrolyte dans le pied de cuve initial est inférieure à 17 g/l, de préférence inférieure à 14 g/l.

Selon une autre caractéristique essentielle dudit procédé, la concentration en silicate exprimée en $SiO_2$ dans le pied de cuve initial est inférieure à 100 g de $SiO_2$ par litre. De préférence, cette concentration est inférieure à 80 g/l, notamment à 70 g/l. En particulier, lorsque l'acide utilisé pour la neutralisation présente une concentration élevée, notamment supérieure à 70 %, il convient alors de travailler avec un pied de cuve initial de silicate dont la concentration en $SiO_2$ est inférieure à 80 g/l.

La deuxième étape consiste à ajouter l'agent acidifiant dans le pied de cuve de composition décrite plus haut.

Cette addition qui entraîne une baisse corrélative du pH du milieu réactionnel se fait jusqu'à ce que l'on atteigne une valeur d'au moins environ 7, généralement comprise entre 7 et 8.

Une fois cette valeur atteinte, et dans le cas d'un pied de cuve de départ ne comprenant qu'une partie de la quantité totale du silicate engagé, on procède alors avantageusement à une addition simultanée d'agent acidifiant et de la quantité restante de silicate.

La réaction de précipitation proprement dite est terminée lorsque l'on a ajouté tout la quantité restante de silicate.

Il est avantageux à la fin de la précipitation et notamment après l'addition simultanée précitée, d'effectuer un mûrissement du milieu réactionnel, ce mûrissement pouvant par exemple durer de 5 minutes à 1 heure.

Il est également possible dans tous les cas (c'est-à-dire aussi bien dans le cas d'un pied de cuve de départ ne comprenant qu'une partie do la quantité totale du silicate engagé), après la précipitation, dans une étape ultérieure éventuelle, d'ajouter au milieu réactionnel une quantité supplémentaire d'agent acidifiant. Cette addition se fait généralement jusqu'à l'obtention d'une valeur de pH comprise entre 3 et 6,5, de préférence entre 4 et 6,5.

La température du milieu réactionnel est généralement comprise entre 70 et 98°C.

Selon une variante de l'invention, la réaction est effectuée à une température constante comprise entre 80 et 95°C. Selon une autre variante de l'invention, la température de fin de réaction est plus élevée que la température de début de réaction : ainsi, on maintient la température au début de la réaction de préférence entre 70 et 95°C, puis on augmente la température en quelques minutes, de préférence jusqu'à une valeur comprise entre 80 et 98°C, à laquelle elle est maintenue jusqu'à la fin de la réaction.

On obtient, à l'issue des opérations qui viennent d'être décrites, une bouillie de silice.

L'étape (B) du procédé consiste en la séparation d'un gâteau de précipitation à partir de cette bouillie obtenue suivant l'un ou l'autre des modes opératoires. La séparation se fait selon tout moyen connu et notamment par filtration avec un filtre à bande, un filtre presse, un filtre rotatif sous vide ou par centrifugation. On recueille alors un gâteau de silice dont l'extrait sec est compris entre 10 et 40 %.

Le gâteau séparé peut être lavé à l'eau pour éliminer des sels de métal alcalin formés lors de la réaction de précipitation. Par exemple, dans le cas où la précipitation met en jeu du silicate de sodium et de l'acide sulfurique, on peut isoler à l'issue de l'étape (B) un gâteau présentant une teneur en $Na_2SO_4$ inférieure à 1,5 % en poids.

Les gâteaux obtenus par filtration presse présentent des extraits secs assez élevés, compris par exemple entre 17 et 30 %. Mais on peut aussi obtenir, notamment par filtration sous vide, des gâteaux dont l'extrait sec est légèrement inférieur, par exemple compris entre 10 et 15 %.

Après la séparation du gâteau de précipitation, on peut effectuer un réempâtage du gâteau pour augmenter son extrait sec à la valeur souhaitée comprise entre 10 et 40 %.

Le réempâtage consiste à ajouter audit gâteau de la poudre de silice en quantité suffisante.

En particulier, la poudre de silice peut être obtenue par séchage notamment par atomisation d'une partie du gâteau à enrichir.

On peut également obtenir une poudre de silice en effectuant un séchage classique du gâteau après lavage par des solvants organiques. Un tel procédé de séchage sera détaillé par la suite.

Le réempâtage permet notamment d'enrichir en silice les gâteaux présentant après la filtration un extrait sec relativement faible (par exemple,inférieur à 15%), de manière à obtenir à l'issue de l'étape (C) une suspension assez concentrée pour l'application recherchée.

L'étape (C) est alors mise en oeuvre sur un gâteau de précipitation ayant une teneur en matière sèche comprise entre 10 et 40 % obtenue, selon les cas, après un réempâtage éventuel.

La transformation du gâteau an suspension moins visqueuse peut se faire par délitage mécanique.

Le délitage peut se produire dans un déliteur/malaxeur, par exemple lors d'une opération de dilution du gâteau avec de l'eau, ou peut être réalisé par broyage humide en faisant passer le gâteau dans un broyeur de type moulin colloïdal ou un broyeur à bille, ou en soumettant le gâteau à des ondes ultrasonores (ultrasonification). De préférence, on effectuera la désagglomération sous ultrasons au moyen d'une sonde ultra-sons de haute puissance.

Afin de réduire l'énergie mécanique nécessaire à la fluidification des gâteaux, on peut procéder simultanément à un délitage chimique.

Pour cela, avantageusement, on peut acidifier la suspension de silice de sorte que son pH soit inférieur à 4. On peut utiliser à cet effet n'importe quel acide.

Une autre possibilité avantageuse consiste à introduire simultanément dans la suspension un acide, notamment de l'acide sulfurique, et un composé de l'aluminium, notamment de l'aluminate de sodium, de sorte que le pH de la suspension reste compris entre 6 et 7 et le rapport pondéral Al/$SiO_2$ soit compris entre 1000 et 3300 ppm.

Dans une variante du procédé, afin d'augmenter l'extrait sec de la suspension de silice, à l'issue de l'étape de délitage chimique, on peut :

- effectuer une seconde étape de filtration (ou centrifugation) suivie éventuellement d'un lavage,
- chasser une fraction de l'eau (par exemple par évaporation par chauffage de la suspension).

Dans ces deux cas, on pourra procéder, en fin de phase de concentration de la suspension à une réhomogénéisation finale de la suspension par délitage mécanique.

Dans une autre variante de ce procédé, on peut ajouter l'acide sulfurique et l'aluminate de sodium à la bouillie issue de la précipitation, c'est-à-dire après l'étape (A) (iii) et avant les opérations de filtration (B).

La présente invention propose également un autre procédé de transformation (C) du gâteau en suspension par lequel :

(i) on lave ledit gâteau avec des solvants organiques et on sèche le gâteau lavé pour obtenir une poudre de silice, puis
(ii) on met en suspension dans l'eau une quantité de ladite poudre de silice telle que l'extrait sec de la suspension finale est compris entre 10 et 40 %.

Les suspensions obtenues par ce procédé présentent également les mêmes propriétés de faible viscosité, de grande stabilité avec un extrait sec élevé.

Le lavage aux solvants organiques permet de déplacer l'eau présente dans les pores du gâteau. Les solvants utilisés à cet effet sont de préférence des solvants polaires, et en particulier l'éthanol et l'éther, qui peuvent être utilisés en mélange.

En particulier, on peut effectuer :

- un premier lavage à l'éthanol
- un second lavage avec un mélange éthanol/éther 50/50
- un troisième lavage à l'éther.

Le gâteau ainsi lavé peut être séché, par exemple à l'air ambiant. On obtient une teneur en eau libre d'environ 6-8 % tout à fait comparable à celle obtenue avec un séchage par atomisation.

Le présent type de séchage permet d'empêcher l'effondrement de porosité dû à l'action des forces de capillarité lors du séchage.

On obtient ainsi une poudre très peu agglomérée, de porosité (mesurée par porosimètrie au mercure) très supérieure à celle obtenue par les techniques de séchage par atomisation.

Cette poudre conduit, lorsqu'elle est remise en suspension dans l'eau en quantité telle que la teneur en matière sèche de la suspension est comprise entre 10 et 40 %, à des suspensions moins visqueuses que celles obtenues par remise en suspension d'une poudre obtenue classiquement par séchage par atomisation, et dont les caractéristiques de viscosité et granulométrie sont identiques à celles décrites précédemment.

Les suspensions concentrées de silice selon l'invention présentant des caractéristiques rhéologiques et granulométriques améliorées peuvent être utilisées dans toutes les applications des sols de silice où les propriétés de transparence ou de translucidité ne sont pas nécessaires.

A cet égard, l'invention a également pour objet l'utilisation desdites suspensions en substitution des sols de silice dans des applications diverses telles que :

- les revêtements anti-corrosion,
- le béton, les suspensions de silice permettant notamment d'accélérer la prise des bétons et/ou d'améliorer les propriétés mécaniques ;
- le papier, où les suspensions peuvent être utilisées comme charge ou bien comme agent de rétention des charges et fibres fines ;
- les colles minérales, pour le papier, le carton, le bâtiment.

La présente invention est illustrée par les exemples suivants.

Dans les exemples suivants, les caractéristiques granulométriques des suspensions de silice sont déterminées grâce à une mesure granulométrique effectuée sur les suspensions, à l'aide d'un granulomètre CILAS.

Le mode opératoire est le suivant :

On dilue la suspension par ajout d'eau permutée jusqu'à l'obtention d'une suspension aqueuse à 4 % de silice qui est homogénéisée pendant 2 minutes par agitation magnétique.

On introduit dans la cuve du granulomètre un volume connu (exprimé en ml) de la suspension homogénéisée et on réalise la mesure granulométrique permettant de déterminer $D_{50}$.

On calcule le rapport (10 x volume de suspension introduite en ml) / (densité optique de la suspension détectée par le granulomètre), indicatif du taux de fines.

En principe, on introduit un volume de suspension tel que l'on puisse obtenir une densité optique proche de 20.

On détermine également dans les exemples des caractéristiques granulométriques de poudre de silice séchée. Le mode opératoire est le suivant :

On pèse dans un pilulier (h = 6 cm et diamètre = 4 cm) 2 grammes de silice obtenue par atomisation de la suspension et l'on complète à 50 grammes par ajout d'eau permutée. On réalise ainsi une suspension aqueuse à 4 % de silice qui est homogénéisée pendant 2 minutes par agitation magnétique. La suspension est ensuite désagglomérée aux ultrasons.

On mesure ainsi l'aptitude à la macro-désagglomération de la silice (rupture des objets de 0,1 à quelques dizaines de microns). On détermine de la même façon le diamètre médian $D_{50}$ et le rapport ci-dessus, qui est alors le facteur de désagglomération aux ultrasons $F_D$.

On procède à la désagglomération sous ultrasons à l'aide d'un sonificateur VIBRACELL BIOBLOCK (600 W), équipé d'une sonde de diamètre 19 mm, comme suit :

La sonde étant immergée sur une longueur de 4 cm, on règle la puissance de sortie de manière à obtenir une déviation de l'aiguille du cadran de puissance indiquant 20 % (ce qui correspond à une énergie dissipée par l'embout de la sonde de 120 Watt/cm$^2$). La désagglomération est effectuée pendant 420 secondes.

La mesure granulométrique est effectuée comme précédemment mais avec un granulomètre SYMPATEC à diffraction laser.

### EXEMPLE 1

On effectue la réaction de précipitation suivante :

Dans un réacteur de 30 litres équipé d'une hélice mixel (vitesse de rotation = 350 tr/mn) et d'un système de régulation de température, on ajoute dix litres d'une solution de silicate de sodium à 5 g/l (rapport molaire $SiO_2/Na_2O$ = 3,4).

La solution de silicate de sodium est portée à une température régulée à 85°C. On introduit alors pendant 3 minutes et 19 secondes sous agitation une solution d'acide sulfurique à 80 g/l à un débit de 0,077 l/mn : le taux de neutralisation du pied de cuve est alors de 85 %.

On effectue alors pendant 70 mn une addition simultanée d'acide et de silicate de sodium à des débits et concentrations respectives de 0,077 l/mn et 80 g/l pour l'acide et de 0,107 l/mn et 130 g/l pour le silicate. Le taux de neutralisation instantané est de 87 % et le taux de consolidation (masse de silice ajoutée pendant l'addition simultanée/masse de silice présente dans le pied de cuve) est de 19,5 %.

On arrête ensuite l'addition de silicate et l'on poursuit l'addition d'acide pendant 10 mn de manière à atteindre un pH final de 4.

La bouillie est ensuite filtrée sur filtre sous vide, lavée avec 10 litres d'eau de manière à obtenir une conductivité du gâteau (mesurée à 5 % d'extrait sec) inférieure à 1000 $\mu$S. Le gâteau obtenu G1 présente un extrait sec de 13 %.

On sèche une fraction du gâteau par atomisation. La silice ainsi obtenue S1 présente les caractéristiques suivantes :

- surface spécifique mesurée par la méthode BET : 230 m$^2$/g ;
- caractéristiques granulométriques après application d'ultrasons (granulomètre SYMPATEC):

$$D_{50} = 0,8 \ \mu m$$

$$F_D = 20$$

On prépare ensuite un gâteau enrichi en silice par réempâtage du gâteau G1 avec la silice S1.

A 2 kg du gâteau G1 (13% d'extrait sec) homogénéisé à l'aide d'un appareil ULTRA TURRAX IKA T50, on ajoute 175 grammes de silice S1, de manière à obtenir un gâteau présentant un extrait sec de 20 %.

On effectue la désagglomération du gâteau en utilisant un SONIFICATEUR VIBRACELL BIOBLOCK (600 W) équipé d'une sonde de diamètre 19 mm.

On introduit 250 ml de gâteau dans un bécher de 400 ml, puis on procède à la désagglomération comme suit :

La sonde étant immergée sur une longueur de 4 cm, on règle la puissance de sortie de manière à obtenir une déviation de l'aiguille du cadran de puissance indiquant 40 % (ce qui correspond à une énergie dissipée par l'embout de la sonde de 240 Watt/cm$^2$). La désagglomération est effectuée pendant 4 minutes.

A l'issue de la désagglomération, on obtient une suspension caractérisée par :

- un extrait sec de 20 %
- une viscosité sous faible cisaillement (50 s-1) inférieure à 2.10$^{-2}$ Pa.s
- caractéristiques granulométriques (granulomètre CILAS)

$$D_{50} = 1 \ \mu m$$

$$F_D = 30$$

Au bout d'une dizaine de jours, on observe un accroissement de la viscosité du sol de 2.10$^{-2}$ à 2.10$^{-1}$ Pa.s. Ce phénomène est réversible, l'application d'ultrasons pendant 4 mn à la suspension de 2.10$^{-1}$ Pa.s permet en effet de retrouver une viscosité de 2.10$^{-2}$ Pa.s. La suspension est soumise au test de sédimentation sous centrifugation.

On centrifuge 40 grammes de suspension à 7500 tours/minute pendant 30 minutes à compter de l'atteinte de la vitesse de rotation (la montée en régime de la centrifugeuse s'effectue en 10 minutes environ).

On recueille alors le surnageant de centrifugation que l'on sèche à 160 °C pendant 2 heures environ (jusqu'à obtention d'un poids de matière constant).

L'extrait sec du surnageant est de 6,16 g ce qui représente 77 % du poids de silice contenu dans les 40 g de suspension à 20 % de silice.

## EXEMPLE COMPARATIF 1

On introduit dans un déliteur malaxeur CELLIER, 4 kg d'un gâteau préparé à partir d'une silice commercialisée par la société RHONE-POULENC CHIMIE sous la marque ZEOSIL 175 MP, obtenu par filtration presse caractérisé par un extrait sec de 22 % et une teneur en sulfate de soude de 1 %. On porte ce gâteau à 60°C et on introduit simultanément pendant la défloculation 12,6 ml d'une solution d'aluminate de sodium (contenant 22 % d'alumine et 18 % d'oxyde de sodium) et 7,15 ml d'acide sulfurique à 80 g/l, de manière à maintenir ce pH à 6,5.

Le ratio Al/SiO$_2$ est d'environ 2500 ppm.

On laisse mûrir pendant 20 minutes en poursuivant la défloculation mécanique.

La suspension obtenue est caractérisée par :

- une viscosité de 6.10$^{-2}$ Pa.s sous un cisaillement de 50 s$^{-1}$.
- un D$_{50}$ (mesuré après application d'ultrasons) de 10 $\mu$m.

On observe une décantation de la suspension au bout d'environ une semaine.

Le test de sédimentation sous centrifugation permet de déterminer que le surnageant contient une quantité de silice s'élevant à 6% du poids de la silice contenue dans la suspension.

## EXEMPLE 2

On effectue la réaction de précipitation suivante :

Dans un réacteur de 30 litres équipé d'une hélice mixel (vitesse de rotation = 350 tr/mn) et d'un système de régulation de température, on ajoute dix litres d'une solution de silicate de sodium à 5 g/l (rapport molaire $SiO_2/Na_2O$ = 3,4).

La solution de silicate de sodium est portée à une température régulée à 85°C. On introduit alors pendant 3 minutes et 29 secondes sous agitation une solution d'acide sulfurique à 80 g/l à un débit de 0,073 l/mn : le taux de neutralisation du pied de cuve est alors de 85 %.

On effectue alors pendant 70 mn une addition simultanée d'acide et de silicate de sodium à des débits et concentrations respectives de 0,073 l/mn et 80 g/l pour l'acide et de 0,107 l/mn et 130 g/l pour le silicate. Le taux de neutralisation instantané est de 87 % et le taux de consolidation (masse de silice ajoutée pendant l'addition simultanée)/(masse de silice présente dans le pied de cuve) est de 19,5 %.

On arrête ensuite l'addition de silicate et l'on poursuit l'addition d'acide de manière à atteindre un pH final de 4.

La bouillie est ensuite filtrée sur filtre sous vide, lavée de manière à amener la teneur en sulfate de sodium à une valeur inférieure à 1 %. Le gâteau obtenu G2 présente un extrait sec de 13 %.

5 kg de ce gâteau G2 sont homogénéisés par délitage mécanique dans un déliteur malaxeur CELLIER puis portés à une température de 60° C dans un bac agité.

On ajoute alors simultanément 9,2 ml de solution d'aluminate de sodium à 22 % en $Al_2O_3$ et 18,3 % en $Na_2O$ (d = 1,505) et 5,2 ml d'une solution d'acide sulfurique à 80 g/l (d = 1,050) de manière à réguler le pH à une valeur de 6,3.

Le ratio $Al/SiO_2$ est d'environ 2500 ppm.

On effectue un mûrissement de 20 minutes sous agitation, puis on soumet la suspension à un délitage aux ultra-sons par fractions de 250 ml pendant 15 min, comme dans l'exemple 1.

A l'issue du délitage, on effectue une seconde filtration sous vide qui amène le gâteau à un extrait sec de 21 %.

Le gâteau est ensuite délité mécaniquement dans le malaxeur CELLIER puis aux ultra-sons dans les conditions de l'exemple 1.

Les caractéristiques de la suspension obtenue sont les suivantes et sont stables dans le temps :

- extrait sec : 21 %
- viscosité par un cisaillement de 50 $s^{-1}$ : 1,3.$10^{-2}$Pa.s
- quantité de silice retrouvée dans le surnageant (test de sédimentation sous centrifugation) : 77%

### EXEMPLE 3

On prépare une suspension de silice dans des conditions analogues à celles de l'exemple 2 avec les modifications opératoires suivantes :

La préparation du pied de cuve est réalisée de manière identique en introduisant l'acide sulfurique à un débit de 0,078 l/min pour obtenir un taux de neutralisation de 90 %.

Le débit d'acide sulfurique est également de 0,078 l/min lors de l'addition simultanée de silicate et d'acide qui dure 60 minutes de sorte que le taux de neutralisation instantané est de 93 % et le taux de consolidation de 16,6 %.

On sépare un gâteau G3 par filtration sous vide dont l'extrait sec est de 13 % et la teneur en sulfate de sodium est inférieure à 1%.

5 kg de ce gâteau G3 sont homogénéisés par délitage mécanique dans un déliteur malaxeur CELLIER puis portés à une température de 60° C dans un bac agité.

On ajoute alors simultanément 11 ml de solution d'aluminate de sodium à 22 % en $Al_2O_3$ et 18,3 % en $Na_2O$ (d = 1,505) et 6,2 ml d'une solution d'acide sulfurique à 80 g/l (d = 1,050) de manière à réguler le pH à une valeur de 6,3.

Le ratio Al $SiO_2$ est d'environ 3000 ppm.

On effectue un mûrissement de 20 minutes sous agitation, puis on soumet la suspension à un délitage aux ultra-sons par fractions de 250 ml pendant 15 min, comme dans l'exemple 1.

A l'issue du délitage, on effectue une seconde filtration sous vide qui amène le gâteau à un extrait sec de 17,9 %.

Le gâteau est ensuite délité mécaniquement dans le malaxeur CELLIER puis aux ultra-sons dans les conditions de l'exemple 1.

Les caractéristiques de la suspension obtenue sont les suivantes et sont stables dans le temps :

- extrait sec : 17,9 %
- viscosité pour un cisaillement de 50 $s^{-1}$ : 0,6.$10^{-2}$ Pa.s
- quantité de silice retrouvée dans le surnageant (test de sédimentation sous centrifugation) :98 %

### EXEMPLE 4

On prépare une suspension de silice dans des conditions analogues à celles de l'exemple 3 avec les différences suivantes :

La préparation du pied de cuve est réalisée de manière identique en introduisant l'acide sulfurique à un débit de 0,076 l/min pendant 3 minutes et 30 secondes pour obtenir un taux de neutralisation de 89 %.

Le débit d'acide sulfurique est également de 0,076 g/min lors de l'addition simultanée de silicate et d'acide qui dure 60 minutes de sorte que le taux de neutralisation instantané est de 91 % et le taux de consolidation de 16,6 %.

On sépare un gâteau G4 par filtration sous vide dont l'extrait sec est de 13 % et la teneur en sulfate de sodium est inférieure à 1%.

5 kg de ce gâteau G4 sont homogénéisés par délitage mécanique dans un déliteur malaxeur CELLIER puis portés à une température de 60° C dans un bac agité.

On ajoute alors simultanément 11 ml de solution d'aluminate de sodium à 22 % en $Al_2O_3$ et 18,3 % en $Na_2O$ (d = 1,505) et 6,2 ml d'une solution d'acide sulfurique à 80 g/l (d = 1,050) de manière à réguler le pH à une valeur de 6,3.

Le ratio $Al/SiO_2$ est d'environ 3000 ppm.

On effectue un mûrissement de 20 minutes sous agitation, puis on soumet la suspension à un délitage aux ultra-sons par fractions de 250 ml pendant 15 m, comme dans l'exemple 1.

A l'issue du délitage, on effectue une seconde filtration sous vide qui amène le gâteau à un extrait sec de 21,7 %.

Le gâteau est ensuite délité mécaniquement dans le malaxeur CELLIER puis aux ultra-sons dans les conditions de l'exemple 1.

Les caractéristiques de la suspension obtenue sont les suivantes et

- extrait sec : 21,7 %
- viscosité pour un cisaillement de 50 $s^{-1}$ 1,8.$10^{-2}$ Pa. s
- quantité de silice retrouvée dans le surnageant (test de sédimentation sous centrifugation) :94 %

**Revendications**

1. Suspension aqueuse de silice de précipitation, **caractérisée en ce que** sa teneur en matière sèche est comprise entre 10 et 40 % en poids, **en ce que** sa viscosité est inférieure à 4.$10^{-2}$ Pa.s pour un cisaillement de 50 $s^{-1}$, et **en ce que** la quantité de silice dans le surnageant obtenu après centrifugation de ladite suspension à 7500 tours par minutes pendant 30 minutes représente plus de 50 % du poids de la silice contenue dans la suspension, **ladite suspension ne comprenant pas d'agent dispersant**

2. Suspension selon la revendication 1, **caractérisée** en ce sa teneur en matière sèche est comprise entre 15 et 35% en poids.

3. Suspension selon la revendication 1 ou 2, **caractérisée en ce que** sa viscosité est inférieure à 2.$10^{-2}$ Pa.s pour un cisaillement de 50 $s^{-1}$.

4. Suspension selon l'une quelconque des revendications 1 à 3, **caractérisée en ce que** la quantité de silice contenu dans le surnageant obtenu après centrifugation de ladite suspension à 7500 tours par minutes pendant 30 minutes représente plus de 60 %, de préférence plus de 70 % du poids de la silice contenue dans la suspension.

5. Suspension selon l'une quelconque des revendications 1 à 3, **caractérisée en ce que** la quantité de silice contenu dans le surnageant obtenu après centrifugation de ladite suspension à 7500 tours par minutes pendant 30 minutes représente plus de 90 % du poids de la silice contenue dans la suspension.

6. Suspension selon l'une quelconque des revendications 1 à 5. **caractérisée en ce que** la répartition granulométrique des agglomérats en suspension est telle que leur diamètre médian $D_{50}$ est inférieur à 5 microns et que le facteur de désagglomération $F_D$ est supérieur à 3 ml.

7. Suspension selon l'une quelconque des revendications 1 a 6, comprenant un gâteau de filtration provenant d'une réaction de précipitation de silice et délité.

8. Suspension selon l'une quelconque des revendications 1 à 7, comprenant da l'aluminium en quantité telle que le rapport pondéral $Al/SiO_2$ soit compris entre 1000 et 3300 ppm.

9. Procédé de préparation d'une suspension aqueuse de silice selon l'une quelconque des revendications 1 à 8, ledit procédé de préparation comprenant :

    (A) une réaction de précipitation de silice par action d'un agent acidifiant sur un silicate d'un métal alcalin M, pour laquelle :

        (i) on forma un pied de cuve initial comportant une partie de la quantité totale du silicate de métal alcalin M engagé dans la réaction, la concentration en silicate, exprimée en $SiO_2$, dans ledit pied de cuve étant inférieure à 20 g/l,

        (ii) on ajoute l'agent acidifiant audit pied de cuve initial jusqu'à ce qu'au moins 5% de la quantité de $M_2O$ présente dans ledit pied de cuve initial soient neutralisés,

        (iii) on ajoute au milieu réactionnel simultanément de l'agent acidifiant et la quantité restante de silicate de métal alcalin M telle que le rapport (quantité de silice ajoutée)/ (quantité de silice présente dans le pied de cuve initial) soit compris entre 10 et 100 ;

    (B) la séparation du mélange réactionnel d'un gâteau de précipitation ayant un extrait sec compris entre 10 et 40 % ;
    ici la désagglomération dudit gâteau, jusqu'à obtention d'une suspension présentant une viscosité inférieure à 4.$10^{-2}$ Pa.s pour un cisaille-

ment de 50 s$^{-1}$, et une quantité de silice dans le surnageant obtenu après centrifugation de ladite suspension à 7500 tours par minutes pendant 30 minutes représentant plus de 50 % du poids de la silice contenue dans la suspension.

10. Procédé de préparation d'une suspension aqueuse de silice selon l'une quelconque des revendications 1 à 8, ledit procédé de préparation comprenant :

(A) une réaction de précipitation de silice par action d'un agent acidifiant sur un silicate d'un métal alcalin M, pour laquelle:

(i) on forme un pied de cuve initial comportant au moins une partie de la quantité totale du silicate de métal alcalin M engagé dans la réaction et un électrolyte, la concentration en silicate, exprimée en SiO$_2$, dans ledit pied de cuve Initial étant inférieure à 100 g/l et la concentration en électrolyte dans ledit pied de cuve initial étant inférieure à 17 g/l
(ii) on ajoute l'agent acidifiant audit pied de cuve initial jusqu'à l'obtention d'une valeur de pH d'au moins environ 7,
(iii) on ajoute au milieu réactionnel de l'agent acidifiant, et, le cas échéant, simultanément la quantité restante du silicate;

(B) la séparation du mélange réactionnel d'un gâteau de précipitation ayant un extrait sec campris entre 10 et 40 % ;

(C) la désagglomération dudit gâteau, jusqu'à obtention d'une suspension présentant une viscosité inférieure à 4.10$^{-2}$ Pa.s pour un cisaillement de 50 s$^{-1}$, et une quantité de silice dans le sumageant obtenu après centrifugation de ladite suspension à 7500 tours par minutes pendant 30 minutes représentant plus de 50 % du poids de la silice contenue dans la suspension.

11. Procédé selon la revendication 9 ou selon la revendication 10, dans lequel, après l'étape (B), on ajoute audit gâteau de silice une quantité de poudre de silice telle que l'extrait sec du gâteau enrichi en silice est compris entre 10 et 40 %.

12. Procédé selon l'une quelconque des revendications 9 à 11, dans lequel, à l'étape (C), on dilue le gâteau de précipitation avec de l'eau.

13. Procédé selon l'une quelconque des revendications 9 à 12, dans lequel, à l'étape (C), on délite mécaniquement le gâteau de précipitation par broyage humide ou par ultrasonification.

14. Procédé selon l'une quelconque des revendications 9 à 13, dans lequel, à l'étape (C), on réalise un délitage chimique simultanément au délitage mécanique, en acidifiant la suspension de silice de sorte que son pH soit inférieur à 4.

15. Procédé selon l'une quelconque des revendications 9 à 13, dans lequel, à l'étape (C), on réalise en délitage chimique conjointement au délitage mécanique, en introduisant simultanément de l'acide sulfurique et de l'aluminate de sodium, de sorte que le pH de la suspension reste compris entre 6 et 7, et le rapport pondéral Al/SiO$_2$ soit compris entre 1000 et 3300 ppm.

16. Procédé selon l'une quelconque des revendications 9 à 13, dans lequel, à l'étape A(iii), on ajoute au mélange réactionnel simultanément de l'acide sulfurique et de l'aluminate de sodium, de sorte que le pH du mélange reste compris entre 6 et 7 et le rapport pondéral Al/SiO$_2$ soit compris entre 1000 et 3300 ppm, avant de procéder à l'étape (B).

17. Procédé selon l'une quelconque des revendications 9 à 11, dans lequel, à l'étape (C),

(i) on lave ledit gâteau de précipitation avec un ou des solvants organiques, et on sèche le gâteau ainsi lavé pour obtenir une poudre de silice, et
(ii) on met en suspension dans l'eau une quantité de ladite poudre de silice telle que l'extrait sec de la suspension finale est compris entre 10 et 40 %.

18. Procédé selon la revendication 17, dans lequel le solvant est choisi parmi l'éthanol, l'éther ou un mélange éthanol/éther.

19. Utilisation d'une suspension selon l'une des revendications 1 à 8, ou d'une suspension aqueuse de silice susceptible d'être obtenue selon le procédé de l'une quelconque des revendications 9 à 18, pour la réalisation de revêtements anti-corrosion.

20. Utilisation d'une suspension selon l'une des revendications 1 à 8, ou d'une suspension aqueuse de silice susceptible d'être obtenue selon le procédé de l'une quelconque des revendications 9 à 18, pour la préparation de bétons.

21. Utilisation d'une suspension selon l'une des revendications 1 à 8, ou d'une suspension aqueuse de silice susceptible d'être obtenue selon le procédé de l'une quelconque des revendications 9 à 18, pour la préparation de papier.

**Patentansprüche**

1. Wässrige Fällungskieselsäure-Suspension, **dadurch gekennzeichnet, dass** ihr Gehalt an Trockensubstanz von 10 bis 40 Gew.% reicht, dass ihre Viskosität kleiner als $4 \times 10^{-2}$ Pa·s bei einer Scherung von 50 s$^{-1}$ ist, und darin, dass die Menge an Kieselsäure im Überstand, der nach Zentrifugation der Suspension bei 7500 Umdrehungen pro Minute für 30 Minuten erhalten wird, mehr als 50% des Gewichts der in der Suspension enthaltenen Kieselsäure darstellt, wobei die Suspension kein Dispersionsmittel umfasst.

2. Suspension nach Anspruch 1, **dadurch gekennzeichnet, dass** ihr Gehalt an Trockensubstanz von 15 bis 35 Gew.% reicht.

3. Suspension nach Anspruch 1 oder 2, **dadurch gekennzeichnet, dass** ihre Viskosität kleiner als $2 \times 10^{-2}$ Pa.s bei einer Scherung von 50 s$^{-1}$ ist.

4. Suspension nach einem der Ansprüche 1 bis 3, **dadurch gekennzeichnet, dass** die Menge an Kieselsäure, die in dem Überstand enthalten ist, der nach Zentrifugation der Suspension bei 7500 Umdrehungen pro Minute für 30 Minuten erhalten wird, mehr als 60%, vorzugsweise mehr als 70% des Gewichts der in der Suspension enthaltenen Kieselsäure darstellt.

5. Suspension nach einem der Ansprüche 1 bis 3, **dadurch gekennzeichnet, dass** die Menge an Kieselsäure, die in dem Überstand enthalten ist, der nach Zentrifugation der Suspension bei 7500 Umdrehungen pro Minute für 30 Minuten erhalten wird, mehr als 90% des Gewichts der in der Suspension enthaltenen Kieselsäure darstellt.

6. Suspension nach einem der Ansprüche 1 bis 5, **dadurch gekennzeichnet, dass** die granulometrische Verteilung von Agglomeraten in Suspension derart ist, dass ihr mittlerer Durchmesser $D_{50}$ kleiner als 50 Mikron ist und der Desagglomerationsfaktor $F_D$ größer als 3 ml ist.

7. Suspension nach einem der Ansprüche 1 bis 6, umfassend einen Filterkuchen, der von einer Kieselsäurefällungsreaktion herrührt und zerkleinert wird.

8. Suspension nach einem der Ansprüche 1 bis 7, umfassend Aluminium in einer derartigen Menge, dass das Gewichtsverhältnis Al/SiO$_2$ von 1000 bis 3000 ppm reicht.

9. Verfahren zur Herstellung einer wässrigen Kieselsäure-Suspension nach einem der Ansprüche 1 bis 8, umfassend:

(A) eine Kieselsäurefällungsreaktion durch Einwirkung eines Säuerungsmittels auf ein Silikat eines Alkalimetalls M, wobei:

(i) ein erster Bodensatz hergestellt wird, der einen Teil der Gesamtmenge an Silikat des Alkalimetalls M umfasst, das an der Umsetzung beteiligt ist, wobei die Konzentration an Silikat, ausgedrückt als SiO$_2$, in dem Bodensatz kleiner als 20 g/l ist,
(ii) das Säuerungsmittel zu dem ersten Bodensatz gegeben wird, bis mindestens 5% der in dem ersten Bodensatz vorliegenden Menge an M$_2$O neutralisiert sind,
(iii) dem Reaktionsmedium gleichzeitig das Säuerungsmittel und die verbleibende Menge an Silikat des Alkalimetalls M hinzugefügt werden, so dass das Verhältnis (zugegebene Kieselsäuremenge)/(im ersten Bodensatz enthaltene Kieselsäuremenge) zwischen 10 und 100 ist;

(B) die Abtrennung vom Reaktionsgemisch eines Fällungskuchens mit einem Trockenextrakt von 10 bis 40%;
(C) die Desagglomeration des Kuchens, bis eine Suspension erhalten wird, die eine Viskosität von weniger als $4 \times 10^{-2}$ Pa·s bei einer Scherung von 50 s$^{-1}$ und eine Menge an Kieselsäure im Überstand, der nach Zentrifugation der Suspension bei 7500 Umdrehungen pro Minute für 30 Minuten erhalten wird, aufweist, die mehr als 50% des Gewichts der in der Suspension enthaltenen Kieselsäure ausmacht.

10. Verfahren zur Herstellung einer wässrigen Kieselsäure-Suspension nach einem der Ansprüche 1 bis 8, umfassend:

(A) eine Kieselsäurefällungsreaktion durch Einwirkung eines Säuerungsmittels auf ein Silikat eines Alkalimetalls M, wobei:

(i) ein erster Bodensatz hergestellt wird, der mindestens einen Teil der Gesamtmenge an Silikat des Alkalimetalls M, das der Umsetzung beteiligt ist, und einen Elektrolyten umfasst, wobei die Konzentration an Silikat, ausgedrückt als SiO$_2$, in dem ersten Bodensatz kleiner als 100 g/l ist und die Konzentration des Elektrolyten in dem ersten Bodensatz kleiner als 17 g/l ist,
(ii) das Säuerungsmittel zu dem ersten Bodensatz gegeben wird, bis ein pH-Wert von mindestens etwa 7 erhalten wird,
(iii) dem Reaktionsmedium das Säuerungsmittel und gegebenenfalls gleichzeitig die verbleibende Menge an Silikat hinzugefügt werden;

(B) die Abtrennung vom Reaktionsgemisch eines Fällungskuchens mit einem Trockenextrakt von 10 bis 40%;

(C) die Desagglomeration des Kuchens, bis eine Suspension erhalten wird, die eine Viskosität von weniger als 4 x 10$^{-2}$ Pa.s bei einer Scherung von 50 s$^{-1}$ und eine Menge an Kieselsäure im Überstand, der nach Zentrifugation der Suspension bei 7500 Umdrehungen pro Minute für 30 Minuten erhalten wird, aufweist, die mehr als 50% des Gewichts der in der Suspension enthaltenen Kieselsäure ausmacht.

11. Verfahren nach Anspruch 9 oder Anspruch 10, wobei nach dem Schritt (B) zu dem Kieselsäurekuchen eine derartige Menge Kieselsäurepulver hinzugefügt wird, dass der Trockenextrakt des mit Kieselsäure angereicherten Kuchens von 10 bis 40% reicht.

12. Verfahren nach einem der Ansprüche 9 bis 11, wobei im Schritt (C) der Fällungskuchen mit Wasser verdünnt wird.

13. Verfahren nach einem der Ansprüche 9 bis 12, wobei im Schritt (C) der Fällungskuchen mechanisch durch Nassmahlung oder Ultraschallbehandlung zerkleinert wird.

14. Verfahren nach einem der Ansprüche 9 bis 13, wobei im Schritt (C) eine chemische Zerkleinerung gleichzeitig mit der mechanischen Zerkleinerung durchgeführt wird, indem die Kieselsäurelösung derart angesäuert wird, dass ihr pH kleiner als 4 ist.

15. Verfahren nach einem der Ansprüche 9 bis 13, wobei im Schritt (C) eine chemische Zerkleinerung zusammen mit der mechanischen Zerkleinerung durchgeführt wird, indem gleichzeitig Schwefelsäure und Natriumaluminat derart zugegeben werden, dass der pH der Suspension zwischen 6 bis 7 verbleibt und das Gewichtsverhältnis Al/SiO$_2$ zwischen 1000 und 3300 ppm liegt.

16. Verfahren nach einem der Ansprüche 9 bis 13, wobei im Schritt A(iii) zum Reaktionsgemisch gleichzeitig Schwefelsäure und Natriumaluminat derart gegeben werden, dass der pH des Gemischs zwischen 6 bis 7 verbleibt und das Gewichtsverhältnis Al/SiO$_2$ zwischen 1000 und 3300 ppm liegt, bevor zu Schritt (B) übergegangen wird.

17. Verfahren nach einem der Ansprüche 9 bis 11, wobei im Schritt (C)

(i) der Fällungskuchen mit einem oder mehreren organischen Lösungsmitteln gewaschen und der so gewaschene Kuchen getrocknet wird, um ein Kieselsäurepulver zu erhalten, und
(ii) eine derartige Menge des Kieselsäurepulvers in Wasser in Suspension gebracht wird, dass der Trockenextrakt der endgültigen Suspension von 10 bis 40% reicht.

18. Verfahren nach Anspruch 17, wobei das Lösungsmittel aus Ethanol, Ether oder einem Ethanol/Ether-Gemisch ausgewählt wird.

19. Verwendung einer Suspension nach einem der Ansprüche 1 bis 8 oder einer wässrigen Kieselsäuresuspension, die nach dem Verfahren nach einem der Ansprüche 9 bis 18 erhalten werden kann, zur Herstellung von Anti-Korrosionsbeschichtungen.

20. Verwendung einer Suspension nach einem der Ansprüche 1 bis 8 oder einer wässrigen Kieselsäuresuspension, die nach dem Verfahren nach einem der Ansprüche 9 bis 18 erhalten werden kann, zur Herstellung von Betonen.

21. Verwendung einer Suspension nach einem der Ansprüche 1 bis 8 oder einer wässrigen Kieselsäuresuspension, die nach dem Verfahren nach einem der Ansprüche 9 bis 18 erhalten werden kann, zur Herstellung von Papier.

**Claims**

1. Aqueous suspension of precipitation silica, **characterised in that** its dry matter content is between 10 and 40% by weight, that its viscosity is lower than 4.10$^{-2}$ Pa.s for a shear of 50 s$^{-1}$, and that the quantity of silica in the supernatant obtained after centrifugation of the said suspension at 7500 r.p.m. for 30 minutes represents more than 50% of the weight of the silica contained in the suspension, wherein the said suspension does not comprise any dispersing agent.

2. Suspension as claimed in Claim 1, **characterised in that** its dry matter content is between 15 and 35% by weight.

3. Suspension as claimed in Claim 1 or 2, **characterised in that** its viscosity is lower than 2.10$^{-2}$ Pa.s for a shear of 50 s$^{-1}$.

4. Suspension as claimed in any one of Claims 1 to 3, **characterised in that** the quantity of silica contained in the supernatant obtained after centrifugation of the said suspension at 7500 r.p.m. for 30 minutes represents more than 60%, preferably more than 70%, of the weight of the silica contained in the suspension.

5. Suspension as claimed in any one of Claims 1 to 3, **characterised in that** the quantity of silica in the supernatant obtained after centrifugation of the said suspension at 7500 r.p.m. for 30 minutes represents more than 90% of the weight of the silica contained in the suspension.

6. Suspension as claimed in any one of Claims I to 5, **characterised in that** the particle size distribution of the suspended agglomerates is such that their median diameter $D_{50}$ is less than 5 $\mu$m and that the disagglomeration factor $F_D$ is higher than 3 ml.

7. Suspension as claimed in any one of Claims 1 to 6, comprising a filter cake which originates from a silica precipitation reaction and has been crumbled.

8. Suspension as claimed in any one of Claims 1 to 7, comprising aluminium in such a quantity that the ratio by weight Al/$SiO_2$ is between 1000 and 3300 ppm.

9. Method of preparation of an aqueous suspension of silica as claimed in any one of Claims 1 to 8, the said method of preparation comprising:

   (A) a reaction of precipitation of silica by the action of an acidifying agent on a silicate of an alkaline metal M, for which:

   (i) an initial sediment is formed which includes a part of the total quantity of the silicate of an alkaline metal M involved in the reaction, the silicate concentration expressed in $SiO_2$ in the said sediment being less than 20 g/l,

   (ii) the acidifying agent is added to the said initial sediment until at least 5% of the quantity of $M_2O$ present in the said initial sediment is neutralised,

   (iii) acidifying agent and the remaining quantity of silicate of the alkaline metal M are added simultaneously to the reaction mixture such that the ratio (quantity of silica added)/(quantity of silica present in the initial sediment) is between 10 and 100;

   (B) the separation of the reaction mixture from a precipitation cake having a dry extract content between 10 and 40%;

   (C) the disagglomeration of the said cake until a suspension is obtained which has a viscosity lower than 4.10$^{-2}$ Pa.s for a shear of 50 s$^{-1}$, and a quantity of silica in the supernatant obtained after centrifugation of the said suspension at 7500 r.p.m. for 30 minutes representing more than 50% of the weight of the silica contained in the suspension.

10. Method of preparation of an aqueous suspension of silica as claimed in any one of Claims 1 to 8, the said method of preparation comprising:

   (A) a reaction of precipitation of silica by the action of an acidifying agent on a silicate of an alkaline metal M, for which:

   (i) an initial sediment is formed which includes a part of the total quantity of the silicate of an alkaline metal M involved in the reaction and an electrolyte, the silicate concentration expressed in $SiO_2$ in the said initial sediment being less than 100 g/l and the electrolyte concentration in the said initial sediment being less than 17 g/l;

   (ii) the acidifying agent is added to the said initial sediment until a pH value of at least approximately 7 is obtained;

   (iii) acidifying agent and, if appropriate, the remaining quantity of silicate are added simultaneously to the reaction mixture;

   (B) the separation of the reaction mixture from a precipitation cake having a dry extract content between 10 and 40%;

   (C) the disagglomeration of the said cake until a suspension is obtained which has a viscosity lower than 4.10$^{-2}$ Pa.s for a shear of 50 s$^{-1}$, and a quantity of silica in the supernatant obtained after centrifugation of the said suspension at 7500 r.p.m. for 30 minutes representing more than 50% of the weight of the silica contained in the suspension.

11. Method as claimed in Claim 9 or as claimed in Claim 10, in which after step (B) a quantity of silica powder is added to the said silica cake such that the dry extract of cake enriched with silica is between 10 and 40%.

12. Method as claimed in any one of Claims 9 to 11, in which at step (C) the precipitation cake is diluted with water.

13. Method as claimed in any one of Claims 9 to 12, in which at step (C) the precipitation cake is crumbled mechanically by wet grinding or by ultrasound treatment.

**14.** Method as claimed in any one of Claims 9 to 13, in which at step (C) a chemical crumbling is carried out simultaneously with the mechanical crumbling, by acidifying the silica suspension so that its pH is less than 4.

**15.** Method as claimed in any one of Claims 9 to 13, in which at step (C) a chemical crumbling is carried out jointly with the mechanical crumbling by introducing simultaneously sulphuric acid and sodium aluminate, such that the pH of the suspension remains between 6 and 7, and the ratio by weight Al/$SiO_2$ is between 1000 and 3300 ppm.

**16.** Method as claimed in any one of Claims 9 to 13, in which at step (A)(iii) sulphuric acid and sodium aluminate are added simultaneously to the reaction mixture, such that the pH of the mixture remains between 6 and 7 and the ratio by weight Al/$SiO_2$ is between 1000 and 3300 ppm, before proceeding to step (B).

**17.** Method as claimed in any one of Claims 9 to 11, in which at step (C)

(i) the said precipitation cake is washed with one or several organic solvents, and the cake thus washed is dried in order to obtain a silica powder, and

(iii) a quantity of the said silica powder is suspended in the water such that the dry extract of the final suspension is between 10 and 40%.

**18.** Method as claimed in Claim 17, in which the solvent is chosen from amongst ethanol, ether or an ethanol/ether mixture.

**19.** Use of a suspension as claimed in one of Claims 1 to 8, or of an aqueous suspension of a silica capable of being obtained by the method as claimed in any one of Claims 9 to 18, for the production of anti-corrosion coatings.

**20.** Use of a suspension as claimed in one of Claims 1 to 8, or of an aqueous suspension of a silica capable of being obtained by the method as claimed in any one of Claims 9 to 18, for the production of concretes.

**21.** Use of a suspension as claimed in one of Claims 1 to 8, or of an aqueous suspension of a silica capable of being obtained by the method as claimed in any one of Claims 9 to 18, for the production of paper.